# EUROPÄISCHE PATENTANMELDUNG

(11) **EP 1 826 649 A2**
(43) Veröffentlichungstag der Anmeldung: **29.08.2007**
(21) Anmeldenummer: 07002384.1
(22) Anmeldetag: 03.02.2007
(51) Int. Cl.: G05D 7/06

(54) **Wege- oder Stromventil**

(30) Priorität: 24.02.2006 DE 102006009166; 22.05.2006 DE 102006024148; 25.07.2006 DE 102006034366
(71) Anmelder: Robert Bosch GmbH, 70184 Stuttgart (DE)
(72) Erfinder: Imhof, Rainer, 97833 Frammersbach (DE)
(74) Vertreter: Thürer, Andreas

(57) **Zusammenfassung**

Erfindungsgemäß hat das Wege- oder Stromventil einen Eingangsanschluss und einen Ausgangsanschluss und einen Schieber, durch den eine fluidisclie Verbindung zwischen dem Eingangsanschluss und dem Ausgangsanschluss steuerbar ist. Der Schieber steuert die fluidische Verbindung an wenigstens zwei veränderlichen; parallel durchströmbaren und axial beabstandeten Öffnungsquerschnitten.

## Beschreibung

Die Erfindung betrifft ein Wege- oder Stromventil gemäß dem Oberbegriff des Patentanspruchs 1.

Die Erfindung ist allgemein bei Ventilen zur Einstellung eines Druckmittelvolumenstroms, insbesondere bei 2-Wege-Ventilen oder stetig verstellbaren Blenden anwendbar. Ein wichtiger Anwendungsbereich sind Stromregelventile, über die ein eingestellter Volumenstrom unabhängig von Druckschwankungen konstant gehalten werden kann. Dies wird dadurch erreicht, dass einer einstellbaren Messblende eine Druckwaage zugeordnet ist, die in Öffnungsrichtung von der Kraft einer Feder sowie einen Druck stromabwärts der Messblende und in Schließrichtung vom Druck stromaufwärts der Messblende beaufschlagt ist. Prinzipiell kann die Druckwaage bei der veränderlichen Messblende vor- öder nachgeschaltet werden.

Ein Stromregelventil mit einer einer Messblende nachgeschalteten Druckwaage ist in der Patentanmeldung DE 10 2004 019 748 A1 der Anmelderin gezeigt. Dieses Stromregelventil hat einen in einer Ventilbüchse geführten Messblendenschieber der Messblende, der in Schließrichtung federvorgespannt ist. Der Öffnungsquerschnitt der Messblende wird über Manteldurchbrüche eines Bohrungssterns in dem Messblendenschieber im Zusammenwirken mit einer umlaufenden Steuerkante eines ventilbüchsenseitigen Ringkanals gebildet, der mit einem Ausgangsanschluss B der Ventilbüchse in Fluidverbindung steht. Der Abströmquerschnitt der Fluidverbindung zwischen dem Ringkanal und dem Ausgangsanschluss B ist über einen in der Ventilbüchse angeordneten und den Messblendenschieber mit einem Endabschnitt umgreifenden Druckwaagenkolben veränderbar.

Nachteilig an dieser Lösung ist, dass im Bereich des Bohrungssterns verhältnismäßig hohe Durchflusswiderstände auftreten, so dass dieses Wege- oder Stromventil eine entsprechend reduzierte Leistung aufweist.

Aufgabe der vorliegenden Erfindung ist es, ein Wege- oder Stromventil mit verringertem Durchflusswiderstand zu schaffen.

Diese Aufgabe wird gelöst durch ein Wege- oder Stromventil mit den Merkmalen des Patentanspruchs 1.

Ein erfindungsgemäßes Ventil hat einen Eingangsanschluss und einen Ausgangsanschluss und einen Schieber, durch den eine fluidische Verbindung zwischen dem Eingangsanschluss und dem Ausgangsanschluss steuerbar ist. Der Schieber steuert die fluidische Verbindung an wenigstens zwei veränderlichen, parallel durchströmbaren und axial beabstandeten Öffnungsquerschnitten.

Eine bevorzugte Anwendung der Erfindung liegt bei Strömregelventilen, bei denen der Messblende eine Druckwaage zugeordnet ist, über die der Druckabfall über der Messblende lastdruckunabhängig konstant gehalten werden kann.

Insbesondere kann ein maximaler zweiter Öffnungsquerschnitt gleich groß oder kleiner als ein maximaler erster Öffnungsquerschnitt ausgebildet sein.

Bei einer bevorzugten Ausführungsform ist über die Öffnungsquerschnitte jeweils eine Fluidverbindung zu einem gemeinsamen Ringraum aufsteuerbar, in den der Ausgangsanschluss mündet. Stirnseitig kann der gemeinsame Ringraum von dem Druckwaagenkolben begrenzt sein.

Vorzugsweise ist die zweite gehäuseseitige Steuerkante von einem Ringkanal gebildet, der über zumindest eine Diagonalbohrung mit dem gemeinsamen Ringraum in Fluidverbindung steht.

Die Herstellung des Ventils ist besonders einfach, wenn der Schieber in einer Schieberhülse geführt ist, die in einer Ventilbohrung des Ventilgehäuses eingesetzt ist und die die Steuerkanten, den Ringraum, den Ringkanal und die zumindest eine Diagonalbohrung abschnittsweise begrenzt.

Bei einer Ausführungsform ist ein Endabschnitt des Druckwaagenkolbens am Außenumfang der Schieberhülse geführt.

Zur Dämpfung der Druckwaage kann der Druckwaagenkolben mit der Schieberhülse oder einem gehäusefesten Abschnitt überlappen und in diesem Überlappungsbereich ein Reibring vorgesehen werden. Ein solcher Ring übernimmt gleichzeitig eine Dichtungsfunktion. Als Reibring kann ein handelsüblicher O-Ring oder eine Gleitringdichtung eingesetzt werden.

Bei einer vereinfachten Lösung ist der Druckwaagenkolben direkt im Gehäuse des Ventils geführt, so dass auf eine separate Führungshülse für den Druckwaagenkolben verzichtet werden kann.

Vorzugsweise ist der die Öffnungsquerschnitte bestimmende Schieber als Hohlschieber ausgeführt, der zumindest abschnittsweise vom Druckmittel durchströmt ist.

Bei einem vergleichsweise geringem Leistungsvolumen reicht es aus, das erfindungsgemäße Ventil direkt, beispielsweise durch einen Proportionalmagneten anzusteuern. Zur Erhöhung des Leistungsvolumens kann das Ventil mit einer Vorsteuerung ausgeführt sein, wobei sich als besonders vorteilhaft eine hydraulische Folgesteuerung herausgestellt hat. Eine derartige Folgesteuerung ist beispielsweise in den Druckschriften DE 196 32 368 A1 und DE 42 14 661 A1 für Proportionalventile beschrieben.

Das Ventil lässt sich besonders kompakt ausführen, wenn diese Folgesteuerung einen im Schieber geführten Vorsteuerkolben hat, der seinerseits über ein Stellglied, beispielsweise einen Proportionalmagneten verstellbar ist, um einen Ablaufdrosselquerschnitt auf- oder zuzusteuern, wobei der Druck stromaufwärts dieses vom Vorsteuerkolben bestimmten Ablaufdrosselquerschnitts in Richtung Verkleinerung des Öffnungsquerschnitts und der Druck am Eingangsanschluss des Ventils in Richtung Vergrößerung des Öffnungsquerschnitts auf den Schieber wirksam ist. Die Druckverhältnisse und die Ansteuerung des Vorsteuerkolbens kann auch in kinematischer Umkehr der oben genannten Verhältnisse erfolgen. Demgemäß wird bei einer derartigen Folgesteuerung durch eine Verstellung des Vorsteuerkolbens der Schieber entsprechend verstellt, bis sich über diesem wieder ein Kräftegleichgewicht einstellt. Eine derartige Folgesteuerung bewirkt eine hydraulische Stellkraftverstärkung, so dass auch große Strömungskräfte am Schieber mit verhältnismäßig kleinen Proportionalmagneten beherrschbar sind.

Bei derartigen Folgesteuerungen ist im Steuerölströmungspfad stromaufwärts des vom Vorsteuerkolben bestimmten Ablaufdrosselquerschnitts vorzugsweise eine Festdrossel vorgesehen.

Bei einer sehr einfach ausgeführten Lösung ist der Vorsteuerkolben mit einer Innenbohrung ausgeführt, über die Steueröl von der Festdrossel zu einer in Schließrichtung wirksamen Steuerfläche an der Rückseite des Schiebers geführt ist.

Zur direkten Übertragung einer Stößelbewegung des Proportionalmagneten ist der Vorsteuerkolben über eine Vorspannfeder in Richtung auf den Stößel vorgespannt.

Der bevorzugte Anwendungsbereich des erfindungsgemäßen Wegeventils dürfte bei schaltbaren oder stetig verstellbaren 2-Wege-Ventilen oder -Blenden liegen.

Das Stromregelventil ist bevorzugterweise als ein 3-Wege-Stromregelventil ausgeführt, wobei über den Druckwaagenkolben eine Fluidverbindung zu einem gehäuseseitigen Tankanschluss des Stromregelventils aufsteuerbar ist, um einen überschüssigen Druckmittelvolumenstrom zum Tank abzuleiten.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 einen Längsschnitt durch ein erfindungsgemäßes 3-Wege-Stromregelventil,
Figur 2 eine vergrößerte Darstellung einer in Figur 1 gezeigten Messblende,
Figur 3 ein Leistungsdiagramm des 3-Wege-Stromregelventils nach Figur 1 im Vergleich mit einem herkömmlichen 3-Wege-Stromregelventil,
Figur 4 einen Längsschnitt durch ein weiteres Ausführungsbeispiel eines Stromregelventils;
Figur 5 das Stromregelventil aus Figur 4 in einer Öffnungsposition;
Figur 6 eine als Folgesteuerung ausgeführte Vorsteuerung des Stromregelventils aus Figur 4 und
Figur 7 eine vergrößerte Darstellung des Stromregelventils aus Figur 4 mit einer Druckwaage und einer veränderlichen Messblende;
Figur 8 eine nach dem erfingungsgemäßen Konzept ausgeführte 2-Wege-Blende.

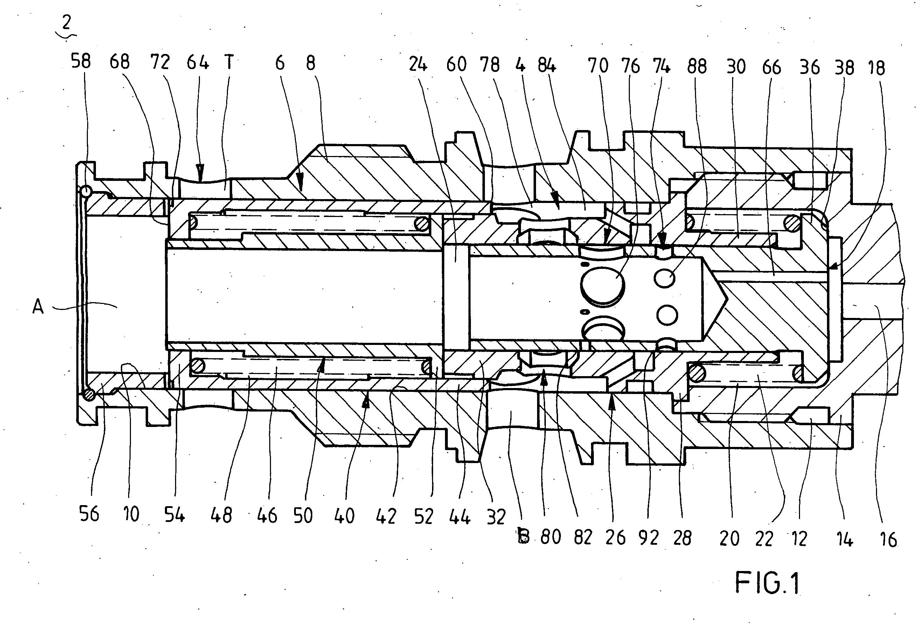

Figur 1 zeigt einen Längsschnitt durch ein hydraulisches 3-Wege-Stromregelventil 2, das eine veränderliche Messblende 4 sowie eine Druckwaage 6 aufweist, die der Messblende 4 nachgeschaltet ist und die gemeinsam einen Stromregler bilden, über den der Druckabfall über der Messblende 4 unabhängig vom Lastdruck, von Temperaturschwankungen und Druckschwankungen am Eingangsanschluss A und am Ausgangsanschluss B konstant gehalten werden kann.

Das Stromregelventil 2 hat ein mehrteiliges Ventilge-häuse 8 mit einer axialen Ventilbohrung 10, die gemäß der Ansicht in Figur 1 rechts eine radiale Erweiterung 12 aufweist. Im Bereich der radialen Erweiterung 12 umgreift das Ventilgehäuse 8 einen Befestigungsabschnitt 14 und ist mit diesem verschraubt. In dem Befestigungsabschnitt 14 ist eine Stößelbohrung 16 zur Aufnahme eines nicht dargestellten Stößels eines Proportionalmagneten zur Ver-schiebung eines Messblendenschiebers 18 der Messblende 4 ausgebildet. Die Stößelbohrung 16 mündet in einen radial erweiterten Federraum 20 zur Aufnahme einer Druckfeder 22, mittels der der Messblendenschieber 18 in Schließ-stellung vorgespannt ist.

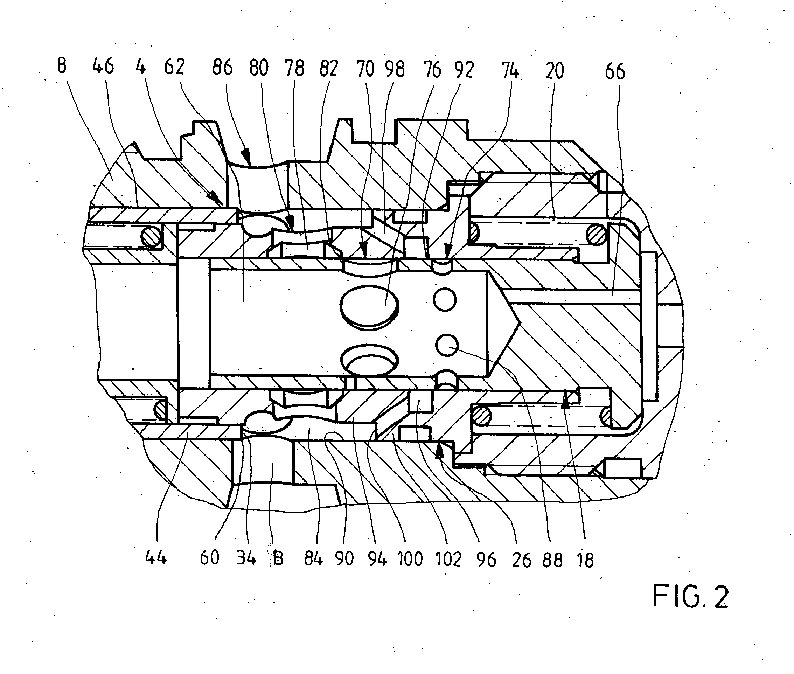

Der Messblendenschieber 18 ist in einer Axialbohrung 24 einer in die Ventilbohrung 10 eingesetzten Schieber-hülse 26 geführt, die über einen stirnseitig zwischen dem Ventilgehäuse 8 und dem eingeschraubten Befestigungs-abschnitt 14 eingespannten Radialbund 28 lagefixiert ist. Eine detaillierte Beschreibung des Messblendenschiebers 1.8 bzw. der Messblende 4 erfolgt anhand Figur 2.

Die Schieberhülse 26 hat einen sich über den Radialbund 28 in axialer Richtung hinaus erstreckenden gemäß der Ansicht in Figur 1 rechten Endabschnitt 30, der in dem Federraum 20 des Befestigungsabschnittes 14 eintaucht und der von der Druckfeder 22 umgriffen ist, die sich an dem Radialbund 28 abstützt und an einem Federteller 36 des Messblendenschiebers 18 angreift, so dass dieser stirnseitig gegen eine Bodenfläche 38 des Federraums 20 in seine Schließstellung vorgespannt ist.

Die Druckwaage 6 hat einen Druckwaagenkolben 40, der an einer Innenwandung 42 der Ventilbohrung 10 geführt ist und mit einem Endabschnitt den Messblendenschieber 18 und die Schieberhülse 26 umgreift, so dass ein Überdeckungsabschnitt 44 gebildet ist.

Der Druckwaagenkolben 40 ist über eine Regelfeder 46 in Öffnungsrichtung vorgespannt, so dass in seiner vorgespannten Grundstellung Druckmittel zum Ausgangsanschluss B abströmen kann. Die Regelfeder 46 ist in einem Raum 48 angeordnet, der radial von dem Druckwaagenkolben 40 und einer Druckwaagenhülse 50 begrenzt ist, die an einem linken Endabschnitt 32 der Schieberhülse 26 stirnseitig anliegt. Dabei stützt sich die Regelfeder 46 an einem Flansch 52 der Druckwaagenhülse 50 ab und greift an einem Bund 54 des Druckwaagenkolbens 40 an, so dass dieser gegen eine in die Ventilbohrung 10 eingesetzte und über einen Sicherungsring 58 gesicherte Abstandshülse 56 vorgespannt ist. In dieser Grundstellung ist, wie bereits erwähnt, der Ausgangsanschluss B aufgesteuert, wohingegen der Druckwaagenkolben 40 mit einer Tanksteuerkante 72 einen einen Tankanschluss T bildenden Radialbohrungsstern 64 zusteuert. Zum Aufsteuern des Radialbohrungssterns 64 des Tankanschlusses T weist der Druckwaagenkolben 40 eine dem Eingangsanschluss A zugewandte wirksame Ringstirn-fläche 68 auf. Somit ist der Druckwaagenkolben 40 in Schließrichtung vom Druck am Eingangsanschluss A und in Öffnungsrichtung vom Druck stromabwärts der Messblende 4 beaufschlagt.

Gemäß Figur 2, die eine vergrößerte Darstellung des Stromregelventils 2 im Bereich der Messblende 4 zeigt, hat der Messblendenschieber 18 eine zum stirnseitigen Eingangsanschluss A geöffnete axiale Sacklochbohrung 62, die bodenseitig über einen Kanal 66 mit dem Federraum 20 des Befestigungsabschnitts 14 in Fluidverbindung steht. Im Bereich der Sacklochbohrung 62 sind in dem Messblen-denschieber 18 zwei in axialer Richtung voneinander beabstandete Bohrungssterne 70, 74 ausgebildet.

Der gemäß der Ansicht in Figur 2 linke Bohrungsstern 70 weist eine Vielzahl von Manteldurchbrüchen 76 auf, die mit jeweils einer gehäuseseitigen Steuerkante 82 einen ersten veränderlichen Messblendenquerschnitt bilden. Die gehäuseseitige Steuerkante 82 wird durch Durchbrüche 78 der Schieberhülse 26 gebildet. Die Durchbrüche 78 münden in einem Ringraum 84, der mit einem den Ausgangsanschluss B bildenden Radialbohrungsstern 86 in Fluidverbindung steht.

Der Ringraum 84 ist in radialer Richtung von einem Innenumfangsabschnitt 90 der Ventilbohrung 10 und von einem Außenumfangsabschnitt 94 der Schieberhülse 26 begrenzt, der von dem Radialbohrungsstern 86 bzw. den Durchbrüchen 78 durchsetzt ist. In axialer Richtung ist der Ringraum 84 von einer dem Ringraum 84 zugewandten Stirnfläche 34 des Überdeckungsabschnitts 44 des Druckwaagenkolbens 40 und von einer Stirnfläche 100 eines Umfangsstegs 102 der Schieberhülse 26 begrenzt. Dabei bildet die Stirnfläche 34 des Überdeckungsabschnitts 44 eine Druckwaagensteuerkante 60 zum Auf- und Zusteuern des Radialbohrungssterns 86.

Der gemäß der Ansicht in Figur 2 rechte Bohrungsstern 74 ist von einer Vielzahl von Mantelbohrungen 88 gebildet, die zusammen mit einer von einem umlaufenden schieberhülseseitigen Ringkanal 96 gebildeten zweiten Steuerkante 92 einen zweiten veränderlichen Messblendenquerschnitt bestimmen, der mit dem ersten Messblendenquerschnitt den gesamten Strömungsquerschnitt der Messblende 4 bildet. Bei dieser Lösung ist der maximale Öffnungsquerschnitt des ersten Messblendenquerschnitt größer als der maximale Öffnungsquerschnitt des zweiten Messblendenquerschnitts.

Der Ringkanal 96 steht über mehrere Diagonälbohrungen 98 in der Schieberhülse 26 mit dem Ringraum 84 in Fluidverbindung.

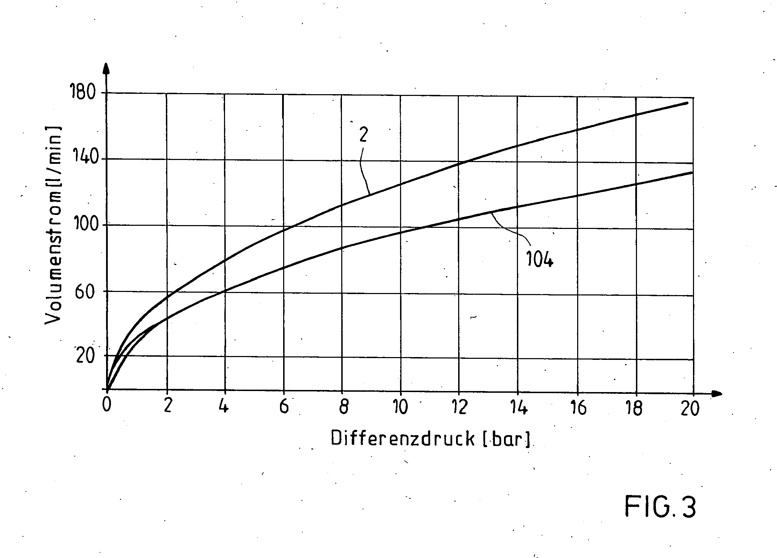

In Figur 3 ist in einem Diagramm das erfindungsgemäße 3-Wege-Stromregelventil 2 einem herkömmlichen 3-Wege-Stromregelventil 104 gegenübergestellt. Der jeweilige Volumenstrom ist über dem Differenzdruck aufgetragen, wobei anhand der Linienverläufe'deutlich zu erkennen ist, dass das erfindungsgemäße Stromregelventil 2 bei gleichem Differenzdruck wie das herkömmliche 3-Wege-Stromregel-ventil 104 einen erhöhten Volumenstrom und demgemäß einen reduzierten Durchflusswiderstand aufweist.

Das 3-Wege-Stromregelventil 2 ist in Figur 1 in der Grundposition bei unbestromten Proportionalmagneten dargestellt. In dieser Grundposition sind die Manteldurchbrüche 76 sowie die Mantelbohrungen 88 versperrt, d. h., das Stromregelventil 2 ist in der Grundposition stromlos geschlossen ausgeführt. Zur Regelung eines Druckmittelvolumenstroms vom Eingangsanschluss A zum Ausgangsanschluss B wird der Proportionalmagnet angesteuert und entsprechend der nicht dargestellte Stößel nach links (Figur 1) ausgefahren, so dass der Messblendenschieber 18 gegen die Kraft der Druckfeder 22 mitgenommen wird. Nach Überfahren einer kleinen Überdeckung werden die Manteldurchbrüche 76 sowie die Mantelbohrungen 88 durch die erste Steuerkante 82 bzw. durch die zweite Steuerkante 92 aufgesteuert, so dass Druckmittel über den Eingangsanschluss A durch die Sacklochbohrung 62, die Bohrurigssterne 70, 74 und die aufgesteuerten Messblendenquerschnitte in den Ringraum 84 einströmen kann. Von dort strömt das Druckmittel über den Radialbohrungsstern 86 zum Ausgangsanschluss B ab. Dabei ist die Ringstirnfläche 68 des Druckwaagenkolbens 40 vom Druck am Eingangsanschluss A in Schließrichtung, d. h. in Richtung einer Verkleinerung des Abströmquerschnitts des Radialbohrungsstern 86 (Fig. 1) des Ausgangsanschlusses B, und die rückwärtige Stirnfläche 34 durch den Druck stromabwärts der Messblendenquerschnitte (Bohrungssterne 70, 74) im Sinne einer Vergrößerung des Abströmquerschnitts beaufschlagt. In gleicher Richtung wirkt die Kraft der Regelfeder 46. Der Druckwaagenkolben 40 stellt sich in eine Gleichgewichtsposition ein, in der der Druckabfall über den Messblendenquerschnitten im Wesentlichen konstant gehalten wird. Der Druck am Eingangsanschluss A wirkt über die Sacklochbohrung 62 und den Kanal 66 auch im Federraum 20, so dass die beiden Stirnflächen des Messblendenschiebers 18 druckausgeglichen sind.

In der Gleichgewichtsposition des Druckwaagenkolbens 40 wird über die Tanksteuerkante 72 der Öffnungsquerschnitt des Radialbohrungssterns 64 des Tankanschlusses T aufgesteuert, so dass überschüssiges Druckmittel zum Tank T abströmen kann. D. h., der überschüssige Druckmittelvolumenstrom wird im Wesentlichen über das Aufsteuern der Verbindung zum Tank T hin abgeregelt. Somit spielt die Veränderung des Abströmquerschnitts des von der Druckwaagensteuerkante 60 auf oder zugesteuerten Ausgangsanschlusses B bei einem derartigen 3-Wege-Stromregelventil 2 eine untergeordnete Rolle. Im Prinzip ist bei einer derartigen Schaltung die Druckwaage 6 nicht in Reihe, sondern parallel zur Messblende 4 geschaltet.

Selbstverständlich können in dem Messblendenschieber 18 weitere im axialen Abstand zu den ersten beiden Bohrungssternen 70, 74 vorgesehene Bohrungssterne ausgebildet sein. Ebenso kann der maximale zweite Messblendenquerschnitt gleich oder größer als der maximale erste Messblendenquerschnitt sein.

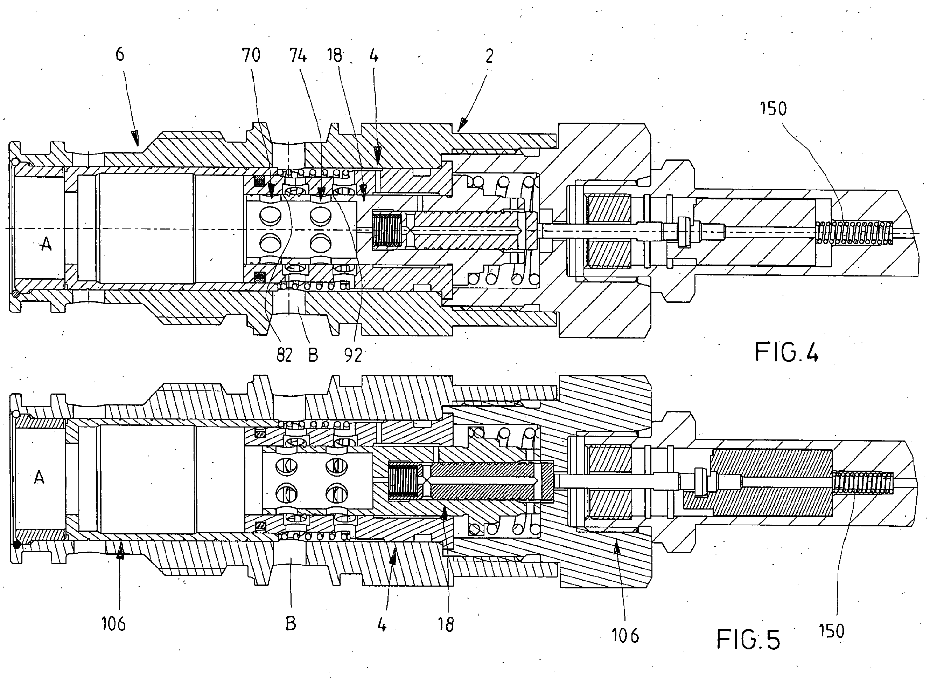

In den Figuren 4 bis,7 ist ein weiteres Ausführungsbeispiel eines nach dem erfindungsgemäßen Konzept ausgeführten Stromregelventils dargestellt, das sich von der vorbeschriebenen Lösung im Wesentlichen durch einen einfacheren Aufbau der Druckwaage 6 und durch eine konkrete Ausführung einer teilweise in den Messblendenschieber 18 integrierten Vorsteuerung in Form einer hydraulischen Folgesteuerung 106 unterscheidet. Bei der vorbeschriebenen Lösung kann eine direkte Ansteuerung, beispielsweise durch einen Proportionalmagneten oder auch die im Folgenden näher beschriebene Folgesteuerung eingesetzt werden.

Auch bei der in Figur 4 dargestellten Lösung sind zwei parallele Steuerkanten 82, 92 vorgesehen, an denen sich durch die zwei Bohrungssterne 70 und 74 am Messblendenschieber 12 zwei Öffnungsquerschnitte parallel aufsteuern lassen. Ein Unterschied zwischen dem in Figur 4 dargestellten Ausführungsbeispiel und dem vorbeschriebenen Ausführungsbeispiel liegt darin, dass bei Letzterem der Öffnungsquerschnitt durch Verschieben des Messblendenschiebers 18 nach links (Ansicht gemäß Figur 1) geöffnet wird, während beim im Folgenden beschriebenen Ausführungsbeispiel die Axialverschiebung des Messblendenschiebers 18 nach rechts (kinematische Umkehr) erfolgt, um die genannten Öffnungsquerschnitte aufzusteuern.

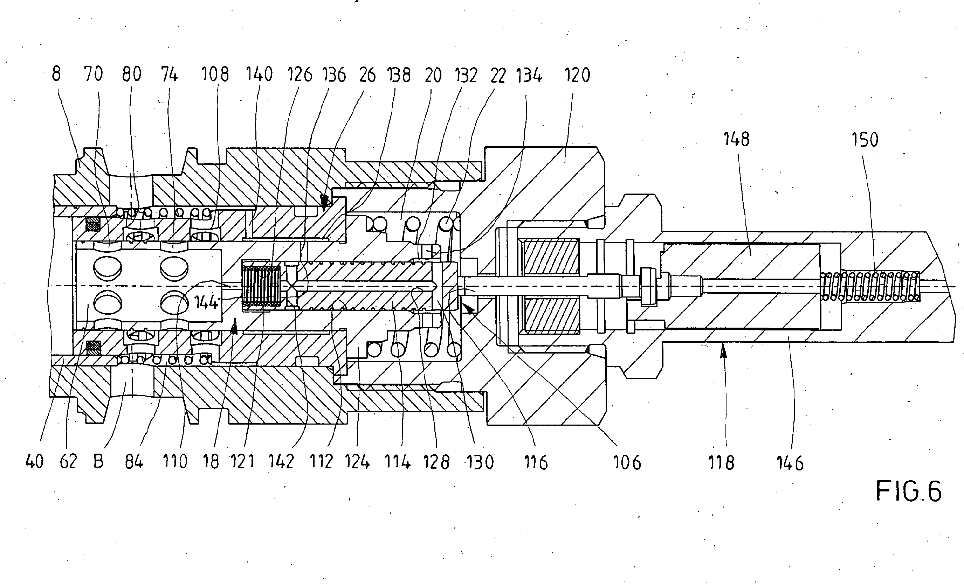

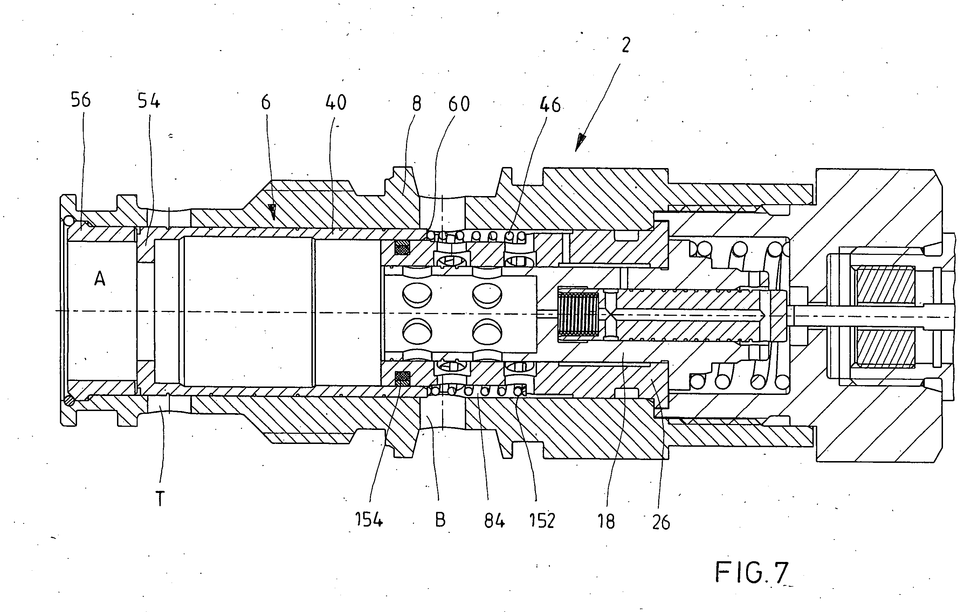

Da der Grundaufbau der beiden Stromregelventile 2 gemäß den Figuren 1 und 4 weitestgehend identisch ist, werden im Folgenden für einander entsprechende Bauelemente der Einfachheit halber die gleichen Bezugszeichen verwendet. In der Darstellung gemäß Figur 4 ist die Messblende 4 geschlossen, da die beiden gehäusefesten Steuerkanten 82, 92 der Messblende 4 von dem Gehäusemantel des Messblendenschiebers 18 überdeckt sind. Figur 5 zeigt eine Öffnungsstellung der Messblende 4,
wobei der Messblendenschieber 18 über die praktisch als Vorsteuerung wirkende Folgesteuerung 106 nach rechts verschoben ist, so dass die beiden Bohrungssterne 70, 74 an den beiden Steuerkanten 92, 82 teilweise aufgesteuert werden und somit entsprechende Öffnungsquerschnitte zum radialen Ausgangsanschluss B hin öffnen. Die Folgesteuerung wird nunmehr anhand der vergrößerten Darstellung in Figur 6 erläutert. In Figur 6 ist lediglich der rechte Teil des Stromregelventils 2 aus Figur 4 mit der Messblende 4 und der Folgesteuerung 106 dargestellt. Auf die besondere Ausführung der Druckwaage wird später anhand Figur 7 eingegangen.

Bei der in den Figuren 4 bis 7 dargestellten Variante ist die Schieberhülse 26 gegenüber dem in Figur 1 dargestellten Ausführungsbeispiel etwas kürzer ausgeführt, wobei der in Figur 1 radial zurückgesetzte rechte Endabschnitt 30 entfällt, so dass die Führungslänge des Messblendenschiebers 18 in der Schieberhülse 26 etwas verringert ist. Wie insbesondere aus Figur 6 hervorgeht, haben die Bohrungssterne 70, 74 etwa den gleichen maximalen Öffnungsquerschnitt - beim zuvor beschriebenen Ausführungsbeispiel ist der Öffnungsquerschnitt des Bohrungssterns 74 etwas geringer ausgeführt. In der Öffnungsposition (Figur 5) erfolgt die Druckmittelverbindung von der Sacklochbohrung 62 zum radialen Ausgangsanschluss B über den Radialbohrungsstern 80 und einen weiteren Radialbohrungsstern 108 in der Schieberhülse 26, die beide in dem Ringraum 84 zwischen dem radial zurückgesetzen Außenumfang der Schieberhülse 26 und der Innenumfangswandung der Ventilbuchse 8 münden. Dieser Ringraum 84 ist nach links hin durch die rückseitige Ringstirnfläche des Druckwaagenkolbens 40 begrenzt. Weitere Einzelheiten der druckwaagenseitigen Konstruktion werden anhand Figur 7 erläutert.

Der als Sacklochbohrung 62 bezeichnete Innenraum des Messblendenschiebers 18 mündet gemäß Figur 6 über eine Drosselbohrung 110 in eine Führungsbohrung 112, deren Durchmesser etwas geringer als derjenige der Sacklochbohrung 62 ausgeführt ist. In dieser Führungsbohrung 112 ist ein Vorsteuerkolben 114 geführt, dessen in Figur 6 rechter Endabschnitt aus dem rechten Endabschnitt des Messblendenschiebers 18 herausragt und an einem Stößel 116 eines Proportionalmagneten 118 anliegt. Bei dem dargestellten Ausführungsbeispiel ist der Vorsteuerkolben 114 über eine Spannfeder 121 in diese Anlageposition gegen den Stößel 116 vorgespannt. Prinzipiell könnte der Vorsteuerkolben 114 jedoch auch einstückig mit dem Stößel 116 ausgeführt oder auf sonstige Weise mit diesem verbunden sein.

Der Proportionalmagnet 118 ist in üblicher Bauweise in eine Ventilbuchse 120 eingeschraubt, die ihrerseits in das patronenförmige Ventilgehäuse 8 eingesetzt ist. Diese Ventilbuchse 120 begrenzt den Federraum 20 für die Druckfeder 22, über die bei dem in den Figuren 4 bis 7 dargestellten Ausführungsbeispiel der Messblendenschieber 18 mit einem Anschlagbund 124 gegen die in Figur 6 rechte Stirnfläche der Schieberhülse 26 vorgespannt ist.

Die Spannfeder 121 ist an einer linken'Ringstirnfläche der Führungsbohrung 112 abgestützt und in einer Federkammer 126 des Vorsteuerkolbens 114 aufgenommen, um diesen in Richtung .zum Stößel 116 vorzuspannen. Die Federkammer 126 ist über eine Axialbohrung 128 und eine oder mehrere Radialbohrungen 130 mit dem Federraum 20 verbunden. Die in diesen Federraum 20 eintauchende rechte Stirnseite des Messblendenschiebers 18 ist im Unterschied zu dem Ausführungsbeispiel gemäß Figur 1 stufenweise radial zurückgestuft, wobei im Mündungsbereich der Radialbohrungen 130 die Führungsbohrung 112 zu einer Innenumfangsnut 132 erweitert ist, die über Querbohrungen 134 in dem radial zurückgesetzten Endabschnitt des Messblendenschiebers 18 ebenfalls mit dem Federraum 20 in Druckmittelverbindung steht, so dass die rechte Stirnseite des Messblendenschiebers 18 mit dem Druck in der Federkammer 126, d. h., dem Druck stromabwärts der Drosselbohrung 110 beaufschlagt ist.

In vergleichsweise geringem Abstand zur Federkammer 126 ist der Mantel des Messblendenschiebers 18 von einem Radialkanal 136 durchsetzt, der seinerseits in einem Ringspalt 138 zwischen dem Außenumfang des Messblendenschiebers 18 und der Innenumfangswandung der Schieberhülse 26 ausgebildet ist. Dieser Ringspalt 138 steht über einen Winkelkanal 140 in Druckmittelverbindung mit dem vorbeschriebenen Ringraum 84 und damit auch mit dem radialen Ausgangsanschluss B.

In der in Figur 6 dargestellten Grundposition des Vorsteuerkolbens 114 ist im Bereich zwischen der rechten Ringstirnfläche der Federkammer 126 und dem Radialkanal 136 eine Radialbohrung 142 ausgebildet, die in einer Ringnut 144 am Außenumfang des Vorsteuerkolbens 114 mündet. Diese Ringnut 144 ist in der dargestellten Grundposition von der Innenumfangswandung der Führungsbohrung 112 überdeckt. Bei einer Axialverschiebung des Vorsteuerkolbens 114 nach rechts (Ansicht in Figur 6) kommt die Ringnut 144 mit dem Radialkanal 136 zur Überdeckung. Dadurch wird ein Ablaufdrosselquerschnitt zum Radialkanal 136 aufgesteuert, so dass Steueröl aus dem mit "Sacklochbohrung" 62 bezeichneten Innenraum des Messblendenschiebers 18 über die Drosselbohrung 110, die Federkammer 126, die Axialbohrung 128 und den aufgesteuerten Ablaufdrosselquerschnitt durch den Radialkanal 136, den Ringspalt 138 und den Winkelkanal 140 zum Arbeitsanschluss B hin strömen kann.

Die hierzu erforderliche Axialverschiebung des Vorsteuerkolbens 114 erfolgt durch den ziehenden Proportionalmagneten 118, dessen in einem Polrohr 146 geführter Anker 148 von einer Regelfeder 150 in Richtung auf den Vorsteuerkolben 114 vorgespannt ist. Bei dem in Figur 6 dargestellten Ausführungsbeispiel ist der Stößel 116 in herkömmlicher Weise in den Anker 148 eingehängt. Da der Aufbau derartiger ziehender Hubmagneten bekannt ist, kann auf eine weitere Erläuterung unter Hinweis auf den Stand der Technik, beispielsweise das Handbuch "Der Hydrauliktrainer", Band 1 bis 5, Vereinigte Fachverlage Mainz, verwiesen werden.

In der in Figur 4 dargestellten Grundposition des Stromregelventils wirkt der Druck am Eingangsanschluss A auf die in Figur 4 linke Stirnfläche des Messblendenschiebers 18. Dieser Druck beaufschlagt über die Drosselbohrung 110, die Federkammer 126, die Axialbohrung 128, die Radialbohrung 130 sowie die Innenumfangsnut 132 und die Querbohrung 134 auch die im Federraum 20 aufgenommene rechte Stirnfläche des Messblendenschiebers 18, so dass dieser druckausgeglichen ist und durch die Kraft der Druckfeder 22 in Richtung seiner Grundposition vorgespannt ist. Der Proportionalmagnet ist unbestromt. Der Anker 148 wird durch die Kraft der Regelfeder 150 gegen den Vorsteuerkolben 114 gedrückt, so dass dieser gegen die Kraft der schwachen Spannfeder 126 in seine dargestellte Grundposition vorgespannt ist, in der die linke Ringstirnfläche an der benachbarten Innenstirnfläche der Führungsbohrung 112 anliegt, wobei die Ringnut 144 von der Innenumfangswandung der Führungsbohrung 112 überdeckt ist und somit keine Steuerölverbindung zum Radialanschluss B vorhanden ist.

Bei Bestromung des Proportionalmagneten 118 wird der Anker gegen die Kraft der Regelfeder 150 nach rechts (Ansicht nach Figur 5) bewegt, wobei der Vorsteuerkolben 114 dieser Bewegung durch die Kraft der Spannfeder 121 folgt und entsprechend nach rechts verschoben wird. Nach einem gewissen Hub überfährt die Ringnut 144 die Überdeckung und öffnet einen Ablaufdrosselquerschnitt zum Radialkanal 136 hin, so dass Steueröl aus der Federkammer 126 zum radialen Arbeitsanschluss B hin abströmen kann. Die in Figur 6 rechte Stirnfläche des Messblendenschiebers 18 wird somit druckentlastet, so dass sich eine Druckdifferenz einstellt, über die der Messblendenschieber 18 solange nach recht verschoben wird, bis dieser eine Relativposition zum Vorsteuerkolben 114 einnimmt, in der über dem Messblendenschieber 18 ein Kräftegleichgewicht wirkt. Der Messblendenschieber 18 folgt somit der Bewegung des Vorsteuerkolbens 114, wobei zu dessen Verstellung ein vergleichsweise'kleiner Proportionalmagnet erforderlich ist. Eine derartige Folgesteuerung ermöglicht insbesondere in Verbindung mit den zwei Bohrungssternen 70, 74 die sichere Beherrschung der am Schieber 18 auftretende Strömungskräfte. Dies erlaubt eine äußerst kompakte Bauweise des Stromregelventils, wobei unter Umständen auf ein Ventil größerer Nennweite verzichtet werden kann, das ohne eine derartige Folgesteuerung eingesetzt werden müsste.

Selbstverständlich ist die in Figur 6 erläuterte Folgesteuerung auch bei einer Ventilkonstruktion gemäß Figur 1 einsetzbar.

Figur 7 zeigt den druckwaagenseitigen Teil des Stromregelventils 2, der im Vergleich zum Ausführungsbeispiel gemäß Figur 1 vereinfacht ausgeführt ist. Bei der in Figur 7 dargestellten Lösung wird auf die Druckwaagenhülse 50 (siehe Figur 1) zur Führung des Druckwaagenkolbens 40 verzichtet, wobei dessen Grundaufbau im Wesentlichen demjenigen aus Figur 1 entspricht, so dass diesbezüglich auf die entsprechenden Ausführungen verwiesen werden kann. Demgemäß liegt ein am linken Endabschnitt des Druckwaagenkolbens 40 ausgebildeter Bund 54 in der Grundposition der Druckwaage 6 an einer in das patronenförmige Ventilgehäuse 8 eingesetzten Abstandshülse 56 an. Der Druckwaagenkolben 40 ist an einer dem Eingangsanschluss A zugewandten Eingangsdruck beaufschlagt. Bei dem in Figur 7 dargestellten'Ausführungsbeispiel wird der Druckwaagenkolben 40 ebenfalls durch die Regelfeder 46 in diese Grundposition vorgespannt, die,jedoch im Unterschied zum Ausführungsbeispiel gemäß Figur 1 nicht im Inneren des Druckwaagenkolbens sondern im Ringraum 84 aufgenommen ist und dabei mit ihrem rechten (Ansicht nach Figur 7) Endabschnitt an einer Schulter 152 der Schieberhülse 26 abgestützt ist und mit ihrem anderen Endabschnitt an dem Druckwaagenkolben 40 angreift.

Ähnlich wie beim eingangs beschriebenen Ausführungsbeispiel überlappt der Druckwaagenkolben 40 mit dem in Figur 1 linken Endabschnitt der Schieberhülse 26. An dieser ist im Überlappungsbereich eine umlaufende Ringnut ausgebildet, in die eine Gleitringdichtung 154 eingesetzt ist. Über diese wird zum Einen der Überlappungsbereich abgedichtet. Der Hauptvorteil liegt jedoch darin, dass der Druckwaagenkolben 40 durch diese Gleitringdichtung 154 einer mechanischen Reibung unterliegt und somit bedämpft wird, so dass keine unerwünschten Druckschwankungen in das System eingeleitet werden. Der Aufbau derartiger Gleitringdichtungen ist bekannt. Üblicherweise wird bei derartigen Gleitringdichtungen ein Ring aus einem Material mit guten Gleiteigenschaften, beispielsweise aus PTFE, modifiziert mit Kohle, Bronze oder Glasfaser eingesetzt und von einem gummielastischen Ring, beispielsweise einem O-Ring an die Gleitfläche angepresst. Die Stärke der mechanischen Reibung kann durch die Vorspannung des O-Rings eingestellt werden.

Prinzipiell kann an Stelle dieser mehrteiligen Gleitringdichtung auch bei einfacheren Anwendungen ein herkömmlicher O-Ring verwendet werden. Im Übrigen entspricht das in Figur 7 dargestellte Ausführungsbeispiel einer Druckwaage 6 dem zuvor beschriebenen Ausführungsbeispiel, so dass weitere Ausführungen entbehrlich sind. Selbstverständlich kann die anhand von Figur 7 dargestellte Bedämpfung oder die Führung des Druckwaagenkolbens 40 ohne Druckwaagenhülse auch bei einem Ausführungsbeispiel gemäß Figur 1 eingesetzt werden.

In den Figuren 1 bis 7 sind jeweils Stromregelventile mit einer Druckwaage und einer verstellbaren Messblende beschrieben. Die Erfindung ist jedoch keinesfalls auf derartige 2- oder 3-Wege-Stromregelventile begrenzt sondern kann in allgemeiner Form bei schaltbaren oder stetig verstellbaren Wege- oder Stromventilen eingesetzt werden.

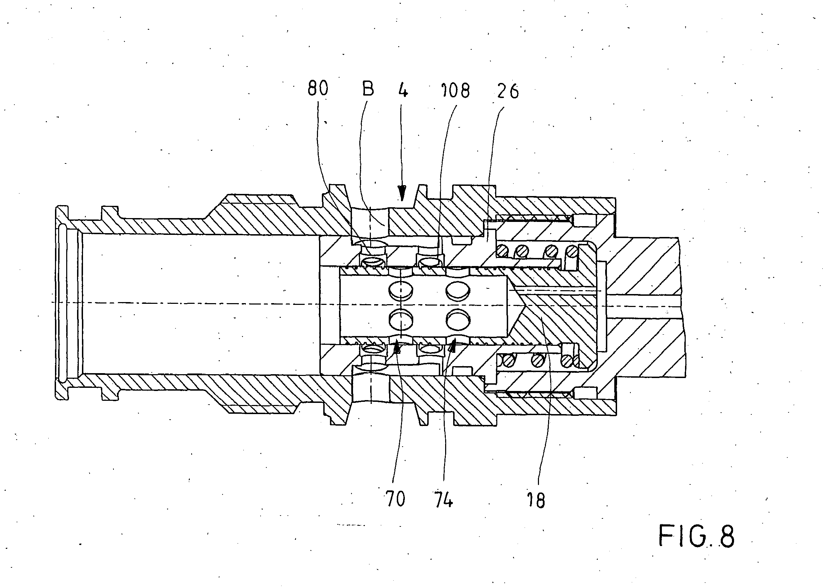

In Figur 8 ist ein Ausführungsbeispiel einer 2-Wege-Blende dargestellt, deren Grundaufbau im Prinzip dem Aufbau der verstellbaren Messblende 4 aus Figur 1 entspricht. Die einzigen Unterschiede zum Ausführungsbeispiel gemäß Figur 1 bestehen darin, dass der Messblende 4 keine Druckwaage 6 zugeordnet ist. Des Weiteren sind - wie bei den Ausführungsbeispielen gemäß den Figuren 4 bis 7 - die beiden Bohrungssterne 70, 74 mit dem gleichen maximalen Öffnungsquerschnitt ausgeführt und die Druckmittelverbindung zum Radialausgangsanschluss B erfolgt - wie beim Ausführungsbeispiel gemäß Figur 4 - über zwei Radialbohrungssterne 80, 108 in der Schieberhülse 26, in der der Messblendenschieber 18 geführt ist. Im Übrigen entspricht dieses Ausführungsbeispiel demjenigen aus Figur 1, so dass weitere Ausführungen entbehrlich sind. Die Verstellung des Messblendenschiebers 18 kann direkt, beispielsweise über einen Proportionalmagneten oder mittels einer Vorsteuerung, beispielsweise einer Folgesteuerung gemäß Figur 6 erfolgen.

Erfindungsgemäß hat das Wege- oder Stromventil einen Eingangsanschluss und einen Ausgangsanschluss und einen Schieber, durch den eine fluidische Verbindung zwischen dem Eingangsanschluss und dem Ausgangsanschluss steuerbar ist. Der Schieber steuert die fluidische Verbindung an wenigstens zwei veränderlichen, parallel durchströmbaren und axial beabstandeten Öffnungsquerschnitten.

### Bezugszeichenliste:

- 2: Stromregelventil
- 4: Messblende
- 6: Druckwaage
- 8: Ventilgehäuse
- 10: Ventilbohrung
- 12: Erweiterung
- 14: Befestigungsabschnitt
- 16: Stößelbohrung
- 18: Messblendenschieber
- 20: Federraum
- 22: Druckfeder
- 24: Axialbohrung
- 26: Schieberhülse
- 28: Radialbund
- 30: rechter Endabschnitt
- 32: linker Endabschnitt
- 34: Stirnfläche
- 36: Federteller
- 38: Bodenfläche des Federraums
- 40: Druckwaagenkolben
- 42: Innenwandung
- 44: Überdeckungsabschnitt
- 46: Regelfeder
- 48: Raum
- 50: Druckwaagenhülse
- 52: Flansch
- 54: Bund
- 56: Abstandshülse
- 58: Sicherungsring
- 60: Druckwaagensteuerkante
- 62: Sacklochbohrung
- 64: Radialbohrungsstern, Tankanschluss
- 66: Kanal
- 68: Ringstirnfläche
- 70: Bohrungsstern
- 72: Tanksteuerkante
- 74: Bohrungsstern

- 76: Manteldurchbruch
- 78: Hülsendurchbruch
- 80: Radialbohrungsstern, Durchbruch
- 82: erste Steuerkante
- 84: Ringraum
- 86: Radialbohrungsstern, Ausgangsanschluss
- 88: Mantelbohrung
- 90: Innenumfangsabschnitt
- 92: zweite Steuerkante
- 94: Außenumfangsabschnitt
- 96: Ringkanal
- 98: Diagonalbohrung
- 100: Stirnfläche
- 102: Umfangssteg
- 104: herkömmliches Stromregelventil
- 106: Folgesteuerung
- 108: Radialbohrungsstern
- 110: Drosselbohrung
- 112: Führungsbohrung
- 114: Vorsteuerkolben
- 116: Stößel
- 118: Proportionalmagnet
- 120: Ventilbuchse
- 121: Spannfeder
- 122 ': Federraum
- 124: Anschlagbund
- 126: Federkammer
- 128: Axialbohrung
- 130: Radialbohrung
- 132: Innenumfangsnut
- 134: Querbohrungen
- 136: Radialkanal
- 138: Ringspalt
- 140: Winkelkanal
- 142: Radialbohrung
- 144: Ringnut
- 146: Polrohr
- 148: Anker
- 150: Regelfeder

- 152: Schulter
- 154: Gleitringdichtung

## Patentansprüche

1. Wege- oder Stromventil mit einem Eingangsanschluss (A) und einem Ausgangsanschluss (B) und mit einem Schieber (18), durch den eine fluidische Verbindung zwischen dem Eingangsanschluss (A) und dem Ausgangsanschluss (B) steuerbar ist, **dadurch gekennzeichnet, dass** der Schieber (18) die fluidische Verbindung an wenigstens zwei veränderlichen, parallel durchströmbaren und axial beabstandeten Öffnungsquerschnitten steuert.

2. Wege- oder Stromventil nach Anspruch 1, wobei ein erster der veränderlichen Öffnungsquerschnitte durch eine erste gehäuseseitige Steuerkante (82) und einen Manteldurchbruch (76) des Schiebers (18) bestimmt ist, und wobei ein zweiter der veränderlichen Öffnungsquerschnitte durch eine zweite gehäuseseitigen Steuerkante (92) und eine radiale Mantelbohrung (88) des Schiebers (18) bestimmt ist.

3. Ventil nach Anspruch 1 oder 2, wobei der maximale zweite Öffnungsquerschnitt kleiner als oder gleich groß wie der maximale erste Öffnungsquerschnitt ist.

4. Ventil nach einem der Ansprüche 1 bis 3, wobei dieses als Stromregelventil (2) ausgeführt ist und die fluidische Verbindung durch eine Druckwaage (6) beeinflussbar ist, deren Druckwaagenkolben (40) von einer Regelfeder (46) und einem Druck stromabwärts der Öffnungsquerschnitte in Öffnungsrichtung und vom Druck stromaufwärts des Öffnungsquerschnitte in Schließrichtung beaufschlagt ist.

5. Ventil nach Anspruch 4, wobei'über die Öffnungsquerschnitte jeweils eine Fluidverbindung zu einem gemeinsamen Ringraum (84) aufsteuerbar ist, der stirnseitig von dem Druckwaagenkolben (40) begrenzt ist und in dem der Ausgangsanschluss (B) mündet.

6. Ventil nach einem der vorhergehenden Ansprüche, wobei die zweite Steuerkante (92) von einem Ringkanal (96) gebildet ist, der über zumindest eine Diagonalbohrung (98) mit dem Ringraum (84) in Fluidverbindung steht.

7. Ventil nach einem der vorhergehenden Ansprüche, wobei der Schieber (18) in einer Schieberhülse (26) geführt ist, die in einer Ventilbohrung (10) des Ventilgehäuses (8) eingesetzt ist und an der die Steuerkanten (82) und (92), der Ringraum (84), der Ringkanal (96) und die zumindest eine Diagonalbohrung (98) zumindest abschnittsweise begrenzt sind.

8. Ventil nach Anspruch 2 und 7, wobei ein Endab-schnitt (44) des Druckwaagenkolbens (40) am Außenumfang der Schieberhülse (26) geführt ist.

9. Ventil nach einem der auf Anspruch 2 oder Anspruch 8 bezogenen Ansprüche, wobei der Druckwaagenkolben (40) abschnittsweise auf der Schieberhülse (26) oder an einem gehäusefesten Abschnitt geführt ist, und wobei im Überlappungsbereich ein Reibring (154) zur Dämpfung des Druckwaagenkolbens (40) vorgesehen ist.

10. Ventil nach einem der vorhergehenden Ansprüche, wobei der Schieber (18) als Hohlschieber ausgeführt ist, der vom Druckmittel durchströmbar ist.

11. Ventil nach einem der vorhergehenden Ansprüche, mit einer hydraulischen Folgesteuerung (106) zur Verstellung des Schiebers (18).

12. Ventil nach Anspruch 11, wobei die Folgesteuerung (106) einen im Schieber (18) geführten Vorsteuerkolben (114) hat, der über ein Stellglied, beispielsweise einen Proportionalmagneten (118) verstellbar ist, um einen Ablaufdrosselquerschnitt (144, 136) auf- oder zuzusteuern, wobei der Druck stromaufwärts des Ablaufdrosselquerschnitts in Richtung Verkleinerung des Öffnungsquerschnitts und der Druck am Eingangsanschluss (A) in Richtung Vergrößerung des Öffnungsquerschnitts auf den Schieber (18) wirksam ist.

13. Ventil nach Anspruch 12, wobei im Steuerölströmungspfad stromaufwärts des Ablaufdrosselquerschnitts (144, 136) eine Drosselbohrung (110) im Schieber (18) vorgesehen ist.

14. Ventil nach Anspruch 13, wobei der Vorsteuerkolben (114) eine Axialbohrung (128) hat, über die Steueröl von der Drosselbohrung (110) zu einer in Öffnungsrichtung wirksamen Steuerfläche des Schiebers (18) geführt ist.

15. Ventil nach einem der Ansprüche 12 bis 14, wobei der Vorsteuerkolben (114) über eine Spannfeder (121) gegen einen Stößel (116) des Proportionalmagnet (118) vorgespannt ist.

16. Ventil nach einem der Ansprüche 2 bis 15, wobei die Regelfeder (46) der Druckwaage (6) einerseits an einer Schulter der Schieberhülse (26) und andererseits an einer schieberseitigen Stirnfläche des Druckwaagenkolbens (40) angreift.

17. Ventil nach einem der vorhergehenden Ansprüche, wobei am' Ventilgehäuse (8) ein radialer Tankanschluss (T) ausgebildet ist, der von einer Tanksteuerkante (72) des Druckwaagenkolbens (40) aufsteuerbär ist.

18. Ventil nach einem der vorhergehenden Ansprüche, so weit diese nicht auf Anspruch 2 bezogen sind, wobei dieses als schaltbares oder stetig verstellbares 2/2-Wegeventil oder - Wege-Blende ausgeführt ist.
